# EUROPÄISCHE PATENTSCHRIFT

(11) **EP 0 646 734 B1**
(45) Veröffentlichungstag und Bekanntmachung des Hinweises auf die Patenterteilung: **12.04.1995**
(21) Anmeldenummer: 93115807.5
(22) Anmeldetag: 30.09.1993
(51) Int. Cl.: F16C 33/14

(54) **Verfahren zur Verbesserung des Einlaufverhaltens von Antrieben mit Sinterlagern**
Procedure to improve the run-in behaviour of drives with sintered bearings
Procédé d'amélioration du comportement de rodage d'entraînements avec paliers frittés

(43) Veröffentlichungstag der Anmeldung: 05.04.1995
(73) Patentinhaber: SIEMENS AKTIENGESELLSCHAFT, 80333 München (DE)
(72) Erfinder: Kümmel, Alfred, Dipl.-Ing., D-97318 Kitzingen (DE); Steegmüller, Horst, Dipl.-Ing. (FH), D-97218 Gerbrunn (DE)

(56) Entgegenhaltungen:
- EP-A- 0 509 263
- FEINWERKTECHNIK & MESSTECHNIK, Bd.98, Nr.12, 1990, MüNCHEN Seiten 535 - 538 M. MÜLLER-BRODMANN 'Sinterlager in der Feinwerktechnik'
- DATABASE WPI Week 9141, Derwent Publications Ltd., London, GB; AN 91-302093 & SU-A-1 626 105 (MOSCOW BAUMAN TECH COLL) 7. Februar 1991
- DATABASE WPI Week 9150, Derwent Publications Ltd., London, GB; AN 91-367716 & SU-A-1 622 670 (MIKHAILOV GB) 23. Januar 1991

## Beschreibung

Die Erfindung bezieht sich auf ein Verfahren zur Verbesserung des Einlaufverhaltens von Antrieben mit Sinterlagern gemäß Patentanspruch 1.

Ein Antrieb mit Sinterlagern in Form eines Getriebemotors für einen Kraftfahrzeug-Fensterheberantrieb ist z.B. durch die EP-A-0 509 263 bekannt; in diesem bekannten Fall treibt die in ein an das Motorgehäuse eines Kommutatormotors angeflanschtes Getriebegehäuse verlängerte Rotorwelle mit einer Schneckenwelle ein Schneckenrad an, das mit der Seilscheibe eines Seilzug-Fensterhebers gekoppelt ist. Die Rotorwelle ist in zumindest einem Sinterlager gelagert, das aufgrund der auf die Flanken der Schneckenwelle einwirkenden Andruckkräfte insbesondere auch radial belastet wird. Bei derartigen als Massenprodukte hergestellten Getriebemotorantrieben unterliegen die abgebbaren Momente einer gewissen Streuung; es hat sich gezeigt, daß die von Fall zu Fall unterschiedlichen Anzugsmomente dieser Getriebemotorantriebe auf Veränderungen in den eingesetzten Sintergleitlagern beruhen.

Es ist z.B. durch den Aufsatz "Sinterlager in der Feinwerktechnik" in der Zeitschrift: Feinwerktechnik & Meßtechnik 98 (1990) 12, S. 535-538 bekannt, daß Sinterlager während des Einlaufens eine metallische Berührung aufzeigen, weil anfänglich die Poreneingänge des Lagers an der Lauffläche offen sind und somit ein großer Teil des zum Aufbau eines Schmierkeils an sich notwendigen Öls im Druckbereich des Lagerspalts in Porenkanäle hineingedrückt wird und dadurch den Aufbau eines tragenden Ölfilms erschweren; als Folge davon arbeiten solche Lager nur im Bereich einer sogenannten Mischreibung anstelle des an sich wünschenswerten Bereiches einer Flüssigkeitsreibung.

Die vorgenannten Vorgänge bei Sintergleitlagern sind von bekannnten Gesetzen der hydrodynamischen Schmierung bei massiven Gleitlagern ableitbar; insbesondere läßt sich nachweisen, daß bei den für jeden Antriebstyp messbaren spezifischen sogenannten Stribeck-Kurven, die die funktionelle Abhängigkeit der Lagerreibzahl "»" von der radialen Belastung und der Drehzahl "n" darstellen, der Übergang von der Flüssigkeitsreibung in das Gebiet der Mischreibung und dem bei noch niedrigerer Drehzahl davorliegenden Gebiet der Grenzreibung bei gesinterten Gleitlagern wesentlich niedriger liegt als bei massiven Gleitlagern.

Ausgehend von der vorgenannten Erkenntnis ist es Aufgabe der Erfindung, mit einfachen Mittel und mit geringem Zeitaufwand das Einlaufverhalten von Antrieben mit Sinterlagern, insbesondere von Getriebemotoren mit Schneckengetrieben für Fensterheber- bzw. Schiebedachantrieben in Kraftfahrzeugen, derart zu verbessern, daß sich nur eine geringe Streuung des Anzugsmomentes der als Massenprodukt hergestellten Antriebe ergibt. Die Lösung dieser Aufgabe gelingt erfindungsgemäß durch ein Verfahren gemäß Anspruch 1; vorteilhafte Ausgestaltungen der Erfindung sind jeweils Gegenstand der Unteransprüche.

Durch die erfindungsgemäß spezifische Belastung mit zunächst einem einer Mischreibungsbelastung entprechenden Bremsmoment und einem anschließenden kurzzeitigen Abbremsen bis zum Stillstand und somit einer Belastung im Grenzreibungsgebiet kann aufgrund des dadurch gegebenen intensiven Durchfahrens des Misch- und des Grenzreibungsbereichs eine plastische Umformung der Lageroberfläche im Sinne eines Verschlusses der Poren sowohl positionsgenau in der jeweiligen individuellen betriebsmäßigen Lastzone des Motors als auch bei kürzest möglicher Einlaufzeit ohne unzulässige Erwärmung des antreibenden Elektromotors gewährleistet werden; neben der Verbesserung der Sinterlagereigenschaften wird dabei auch die Lauffläche der Rotorwelle selbst verbessert, so daß die Leistungsabgabe der Antriebe nicht nur untereinander vergleichmäßigt sondern auch insgesamt verbessert werden kann

Das erfindungsgemäße Verfahren wird im folgenden anhand zweier Funktionsdarstellungen in der Zeichnung näher erläutert; darin zeigen:
- FIG 1: eine sogenannte Stribeck-Kurve für einen bestimmten Typ eines Antriebs mit Sinterlagern, insbesondere eines Getriebemotors mit Schneckengetriebe für einen Fensterheberantrieb in einem Kraftfahrzeug;
- FIG 2: den erfindungsgemäßen Belastungsprozeß zur Verbesserung des Einlaufverhaltens.

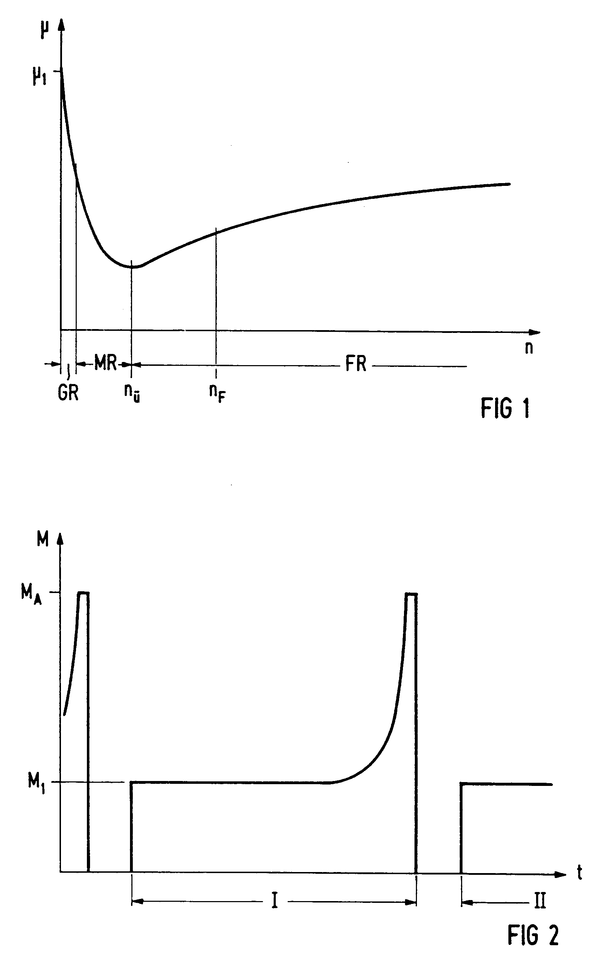

FIG 1 zeigt die sogenannte Stribeck-Kurve eines für eine Verbesserung des Einlaufverhaltens vorgesehenen Antriebstyps, im vorliegenden Fall eines Fensterheberantriebes mit einem von einem Kommutator angetriebenen Schneckengetriebe; die Stribeck-Kurven geben dabei die funkionelle Abhängigkeit der Lagerreibzahl "»" von der radialen Belastung und der Drehzahl "n" an. Im sogenannten Grenzreibungsbereich GR ist praktisch noch kein Schmiereffekt gegeben, so daß von einer Trockenreibung auszugehen ist. Im anschließenden Mischreibungsbereich MR ist zwar schon ein Schmiereffekt vorhanden, jedoch baut sich noch kein Schmierkeil im Sinne einer hydrodynamischen Schmierung auf. Der eigentliche Betriebseinsatz ist durch den sogenannten Flüssigkeitsreibungsbereich ER vorzugsweise bei einer Drehzahl "n_{F"} gekennzeichnet, in dem es in Abhängigkeit von der zunehmenden Drehzahl und der radialen Belastung aufgrund eines Schmiermitteldruckaufbaus zum Aufschwimmen der Rotor- bzw. Schneckenwelle in den Sinterlagern und damit zur Trennung zwischen Welle und Lagerkörper kommt.

FIG 2 zeigt einen Zyklus I und einen beginnenden wiederholten Zyklus II gemäß einem erfindungsgemäß vorgesehenen Belastungsprozeß zur Verbesserung des Einlaufverhaltens. Dazu wird, vozugsweise mit einer ansteuerbaren Magnetpulverbremse, dem Antrieb ein Belastungsmoment M₁ derart vorgegeben, daß die Lagerstelle knapp unterhalb der Übergangsdrehzahl n_{ü} gemäß der Stribeck-Kurve nach FIG 1 und somit im Mischreibungsgebiet MR arbeitet.

Das Lastmoment M₁ entspricht etwa dem Antriebsmoment, das zum Bewegen der Fensterscheibe zwischen ihrem unteren Anschlag und ihrem oberen Anschlag im Türrahmen eines Kraftfahrzeuges notwendig ist. Aus dieser Bewegung mit dem Lastmoment M₁ wird anschließend der Motor mit Übergang in den Grenzreibungsbereich GR bis zum Stillstand M_{A} abgebremst.

Dieser Belastungszyklus wird mehrfach wiederholt, wobei zwischen den einzelnen Zyklen I bzw. II usw. zweckmäßigerweise kurze Belastungspausen vorgesehen werden, in denen einerseits die die Belastung erzeugende Bremse wieder auf ihren neuen Belastungswert eingestellt wird und andererseits der zuvor der Belastung unterworfene Antrieb abkühlen kann. Die Belastungszyklen werden solange wiederholt, bis sich eine Verbesserung des Einlaufverhaltens, insbesondere aufgrund einer spezifischen Zunahme des Anzugsmomentes des Antriebes, eingestellt hat.

Der Übergang zwischen der Belastung im Mischreibungsbereich MR einerseits und dem anschließenden Grenzreibungsbereich GR andererseits erfolgt nach einer vorteilhaften Ausgestaltung der Erfindung, derart daß die dabei von dem antreibenden Kommutatormotor aufgenommene elektrische Energie minimiert ist; zweckmäßigerweise erfolgt ein derartiger Übergang hyperbolisch bzw. parabolisch.

Eine entsprechende Vorrichtung zum Verbessern des Einlaufverhaltens enthält zweckmäßige Mittel zur Motorbelastung, insbesondere eine Magnetpulverbremse, in einem Belastungsprozeß mit jeweils einer ersten Belastung (M₁) im Sinne eines Betriebes der Sinterlager im Mischreibungsbereich (MR) und einem anschließenden Übergang zu einer zweiten Belastung (M_{A}) im Sinne eines Betriebes der Sinterlager im Grenzreibungsbereich (GR).

Weiterhin sind vorteilhafterweise Steuermittel zur Erhöhung des Lastmomentes zwischen der ersten Belastung M₁ und der zweiten Belastung M_{A} im Sinne einer minimalen Energieaufnahme des Antriebes, insbesondere der elektrischen Energieaufnahme (I·U) eines elektrischen Getriebemotors vorgesehen, wobei nach speziellen Ausgestaltungen eine hyperbelförmige bzw. parabelförmige Übergangsfunktion sich als besonders zweckmäßig im Sinne eines schnellen und wirksamen, jedoch ohne mit zu großer Wärmebeanspruchung belasteten Einlaufvorganges erwiesen hat.

## Patentansprüche

1. Verfahren zur Verbesserung des Einlaufverhaltens von Antrieben mit Sinterlagern, insbesondere Getriebemotoren für Fensterheber- bzw. Schiebedachantrieben in Kraftfahrzeugen, mit dem Merkmal:
a) Die Antriebe werden vor ihrem betriebsmäßigen Einsatz in wiederholten Zyklen (I;II usw.) einem Belastungsprozeß mit jeweils einer ersten Belastung (M₁) im Sinne eines Betriebes der Sinterlager im Mischreibungsbereich (MR) und einem anschließenden Übergang zu einer zweiten Belastung (M_{A}) im Sinne eines Betriebes der Sinterlager im Grenzreibungsbereich (GR) unterworfen.

2. Verfahren nach Anspruch 1 mit dem Merkmal:
b) Die erste Belastung (M₁) liegt dicht unterhalb des Übergangs (n_{ü}) zwischen dem Mischreibungsbereich (MR) einerseits und dem Flüssigkeitsreibungsbereich (FR) andererseits.

3. Verfahren nach Anspruch 1 und/oder 2 mit dem Merkmal:
c) Die zweite Belastung (M_{A}) liegt im Bereich des Stillstandes und somit des Anzugmomentes des Antriebes.

4. Verfahren nach zumindest einem der Ansprüche 1-3 mit dem Merkmal:
d) Die Erhöhung des Lastmomentes zwischen der ersten Belastung (M₁) und der zweiten Belastung (M_{A}) erfolgt im Sinne einer minimalen Energieaufnahme des Antriebes, insbesondere der elektrischen Energieaufnahme (I·U) eines elektrischen Getriebemotors.

5. Verfahren nach zumindest einem der Ansprüche 1-4 mit dem Merkmal:
e) Der Übergang vom der ersten Belastung (M₁) zu der zweiten Belastung (M_{A}) erfolgt entsprechend einer parabelförmigen Übergangsfunktion des Lastmoments.

6. Verfahren nach zumindest einem der Ansprüche 1-4 mit dem Merkmal:
f) Der Übergang von der ersten Belastung (M₁) zu der zweiten Belastung (M_{A}) erfolgt entsprechend einer hyperbelförmigen Übergangsfunktion des Lastmoments.

7. Verfahren nach zumindest einem der Ansprüche 1-6 mit dem Merkmal:
g) Zwischen den einzelnen Zyklen sind Belastungspausen vorgesehen.

## Claims

1. Process for improving the run-in characteristics of drives having sintered bearings, in particular of geared motors for window-lifter or sliding-roof drives in motor vehicles, characterized in that:
a) The drives are subjected, prior to their operational usage in repeated cycles (I;II etc.), to a loading procedure exhibiting respectively a first load (M₁), with the effect of operation of the sintered bearings in the mixed friction region (MR), and a subsequent transition to a second load (M_{A}), with the effect of operation of the sintered bearings in the boundary friction region (GR).

2. Process according to Claim 1, characterized in that:
b) The first load (M₁) lies closely below the transition (n_{ü}) between the mixed friction region (MR), on the one hand, and the fluid friction region (FR) on the other hand.

3. Process according to Claim 1 and/or 2, characterized in that:
c) The second load (M_{A}) lies in the region of the standstill, and hence of the starting torque of the drive.

4. Process according to at least one of Claims 1-3, characterized in that:
d) The increase in the load torque between the first load (M₁) and the second load (M_{A}) is realized with the effect of minimal energy consumption of the drive, in particular the electrical energy consumption (I·U) of an electric geared motor.

5. Process according to at least one of Claims 1-4, characterized in that:
e) The transition from the first load (M₁) to the second load (M_{A}) is realized according to a parabolic transition function of the load torque.

6. Process according to at least one of Claims 1-4, characterized in that:
f) The transition from the first load (M₁) to the second load (M_{A}) is realized according to a hyperbolic transition function of the load torque.

7. Process according to at least one of Claims 1-6, characterized in that:
g) Between the individual cycles, load intervals are provided.

## Revendications

1. Procédé pour améliorer le comportement de rodage de dispositifs d'entraînement comportant des paliers frittés, notamment de moto-réducteurs pour des dispositifs d'entraînement de lève-glaces ou de toits coulissants de des véhicules automobiles, présentant la caractéristique suivante :
a) avant leur utilisation fonctionnelle, les dispositifs d'entraînement sont soumis, pendant des cycles répétés (I; II, etc.), à un processus de chargement par respectivement une première charge (M₁) en vu d'un fonctionnement des paliers frittés dans le domaine de frottement mixte (MR) et avec un passage ultérieur à une seconde charge (M_{A}) en vu d'un fonctionnement des paliers frittés dans le domaine du frottement limite (GR).

2. Procédé suivant la revendication 1, présentant les caractéristiques suivantes :
b) la première charge (M₁) est juste au-dessous de la transition (n_{ü}) entre le domaine de frottement mixte (MR) d'une part et le domaine de frottement liquide (FR) d'autre part.

3. Procédé suivant la revendication 1 et/ou 2 présentant la caractéristique suivante :
c) la seconde charge (M_{A}) est dans le domaine de l'état d'arrêt et par conséquent du couple au démarrage du dispositif d'entraînement.

4. Procédé suivant au moins l'une des revendications 1 à 3 présentant la caractéristique suivante :
d) l'accroissement du couple de charge entre la première charge (M₁) et la seconde charge (M_{A}) s'effectue en vu d'une consommation minimale d'énergie du dispositif d'entraînement, en particulier de la consommation d'énergie électrique (I.U) d'un moto-réducteur électrique.

5. Procédé suivant au moins l'une des revendications 1 à 4 présentant la caractéristique suivante :
e) le passage de la première charge (M₁) à la seconde charge (M_{A}) s'effectue conformément à une fonction de transition de forme parabolique du couple de charge.

6. Procédé suivant au moins l'une des revendications 1 à 4, présentant la caractéristique suivante :
f) le passage de la première charge (M₁) à la seconde charge (M_{A}) s'effectue conformément à une transition de forme hyperbolique du couple de charge.

7. Procédé suivant au moins l'une des revendications 1 à 6 présentant la caractéristique suivante :
g) des pauses d'application de charge sont prévues entre les cycles.
